# EUROPEAN PATENT APPLICATION

(11) **EP 4 199 239 A1**
(43) Date of publication of application: **21.06.2023**
(21) Application number: 21215930.5
(22) Date of filing: 20.12.2021
(51) Int. Cl.: H01M 50/56, H01M 10/6553, H01M 10/6556, H01M 50/213, H01M 50/249, H01M 50/271, H01M 50/289, H01M 50/291, H01M 50/505, H01M 10/6554, H01M 50/516

(54) **BATTERY MODULE COOLING**

(71) Applicant: Rimac Automobiles Ltd., 10431 Sveta Nedelja (HR)
(72) Inventor: Pavlovic, Ivan, 10000 Zagreb (HR); Kisic, Daniel, 10450 Jastrebarsko (HR)
(74) Representative: Hoffmann Eitle

(57) **Abstract**

A battery module comprising at least two battery assemblies, each in turn comprising a plurality of cells with two poles at opposing ends and arranged laterally in one row next to each other so that a pole of a cell is next to a pole of a neighbouring cell, and a plurality of interconnectors connecting a pole of a cell to pole of a neighbouring cell, a housing arranged to accommodate the at least two battery assemblies and forming a respective continuous space around each row of poles allowing for fluid flow, and comprising an inlet opening and an outlet opening for each continuous space formed, and a pair of electric module terminals for connecting the battery assemblies to the outside, each electric module terminal being arranged thermally closer to one of the inlet openings than to an outlet opening.

## Description

### Technical field

The present invention relates to cooling of battery modules that hold a plurality of cells. The present invention relates specifically to battery modules that provide electric power to electric vehicles such as electric cars.

### Background

Electric vehicles are experiencing an increased popularity as they gradually replace or complement conventional vehicles with combustion type engines. Vehicles that employ electric motors as the means of drive and propulsion of course require on board electric power that can be generated by electric power sources (for example combustion engines and generators in so-called hybrid vehicles or fuel cells in hydrogen-powered vehicles). An important role, however, play of course batteries for the main storage or at least for buffering and short-time storage purposes. Usually, a relatively large capacity is desirable.

Such on-board power storages are composed of one or more battery modules that, in turn, comprise a plurality of battery cells. The individual cells are usually cylindrical cells in which a layered configuration of electrodes and electrolytes are rolled up so as to provide a large internal interaction surface. An individual cell provides a nominal cell voltage which is typically in the range of 1.5 Volts to 4.2 Volts, depending on chemistry and charging and degradation state of the battery cell. Besides, there are of course not only electrolyte-type battery cells, such as Lithium-ion batteries, but also solid state type battery cells that however incorporate a similar or related chemistry. Nevertheless, individual battery cells feature usually a cylindrical or slab-like housing regardless of the chemistry or physics employed. Further, the individual battery cells provide a relatively low voltage usually far below 10 volts, so that several cells are connected in series to provide the target voltage required in the vehicle.

Usually, a number of cylindrical cells are arranged in an array of upright oriented cells. This configuration allows not only a dense packing but also a convenient way for interconnection in order to attain the required series and parallel connections between and amongst cells. This configuration has a minimum height that is governed by the height or length of an individual cell, although a cell in principle features much more miniature dimensions in other directions. There are also other configurations that specifically consider the arrangement of the modules inside a vehicle and/or the height and/or position of the vehicle's centre of gravity.

Further, in such battery modules there is usually also generated heat from effects during charging and/or discharging the cells. In essence, the chemical processes for binding or releasing charges are associated with respective electric currents that dissipate heat as the flow through conductive paths with finite resistance. The cells of such battery modules may thus require active cooling by means of a cooling fluid (liquid, air, gas, etc.) that flows along or in the thermal vicinity of the cells so as to absorb heat and carry it away from the cells.

There is therefore a need for improved battery modules that allow for space-efficient mounting inside the vehicle and efficient cooling of the battery cells as well as other active and passive elements of the battery module.

### Summary

The mentioned problems and drawbacks are addressed by the subject matter of the independent claims. Further preferred embodiments are defined in the dependent claims. Specifically, the embodiments of the present invention may provide substantial benefits that are described in part herein.

According to one aspect of the present invention there is provided a battery module comprising at least two battery assemblies, each in turn comprising a plurality of cells with two poles at opposing ends and arranged laterally in one row next to each other so that a pole of a cell is next to a pole of a neighbouring cell, and a plurality of interconnectors connecting a pole of a cell to pole of a neighbouring cell, a housing arranged to accommodate the at least two battery assemblies and forming a respective continuous space around each row of poles allowing for fluid flow, and comprising an inlet opening and an outlet opening for each continuous space formed, and a pair of electric module terminals for connecting the battery assemblies to the outside, each electric module terminal being arranged thermally closer to one of the inlet openings than to an outlet opening.

### Brief description of the drawings

Embodiments of the present invention, which are presented for better understanding the inventive concepts but which are not to be seen as limiting the invention, will now be described with reference to the figures in which:
- Figures 1A and 1B: show a schematic top view and, respectively, a schematic explosion view of a battery module and parts thereof according to an embodiment of the present invention;
- Figures 2A and 2B: show schematic views of an electric terminal configuration according to an embodiment of the present invention;
- Figures 3A and 3B: show a schematic views of an electric terminal configuration according to an embodiment of the present invention; and
- Figure 4: shows a schematic view of an electric terminal configuration according to an embodiment of the present invention.

### Detailed description

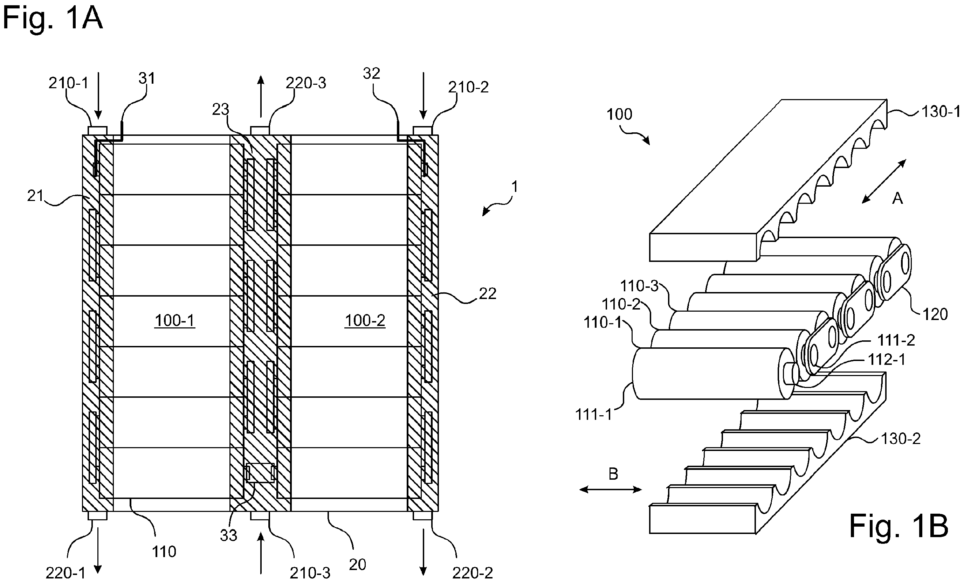

Figure 1 shows a schematic view of battery module according to an embodiment of the present invention. Figure 1A shows a schematic top view of the battery module 1 and Figure 1B shows an explosion view of a corresponding battery assembly 100 for the purpose of explaining details that are less visible in a planar view. Specifically, the battery module 1 comprises at least two battery assemblies 100-1, 100-2, of which a sole battery assembly is shown in Figure 1B.

Each battery module 100 (-1, -2) comprises a plurality of cells 110-1, 110-2, 110-3, ..., which in turn comprise two poles 111-1, 112-1 each at opposing ends in the usual form of a positive and a negative pole. The cells 110-1, 110-2, 110-3, ... are arranged laterally in one row next to each other so that a pole (e.g. 112-1) of a cell (e.g. 110-1) is next to a pole (111-2) of a neighbouring cell (110-2) and a plurality of interconnectors 120 connecting a pole of a cell to a pole of a neighbouring cell. For example, pole 112-1 is positive and pole 111-2 is negative so that in such a configuration, interconnectors 120 may establish a series connection of a plurality of cells and correspondingly add up the voltages of all the connected individual cells.

The battery module 1 further comprises a housing 20 that is arranged to accommodate the at least two battery assemblies 100-1, 100-2 and to form respective continuous spaces 21, 22, 23 around each row of poles allowing for fluid flow. The row of poles may be as depicted along axis A and thus the cells are arranged laterally in one row next to each other so that a pole of a cell is next to a pole of a neighbouring cell, thereby forming a row of poles. The battery module 1 may comprise one or more cell holders 130-1, 130-2 that hold the individual cells a desired position, especially considering a well-defined mutual distance to each other. Further, the cell holders 130-1,... may contribute in forming the mentioned continuous spaces 21,... in that they obstruct fluid flow inside the housing 20, for example, predominantly in a direction B.

The battery module 1 further comprises an inlet opening 210-1, 210-2, 210-3 and an outlet opening 220-1, 220-2, 220-3 for each continuous space 21, 22, 23 formed. The opening may be defined as an inlet or an outlet by corresponding connector types (e.g. connector "genders") that allow for the connection of a fluid handling system only in the prescribed fashion, i.e. the connection of a fluid providing end to an inlet and a connection of a fluid receiving end to an outlet. Further, valves and/or other fluid flow active elements may define the differentiation between an inlet and an outlet. Ultimately, the differentiation between an inlet and outlet is achieved during at least operation of the battery module and an inlet in the context of the present invention may relate to the suitability of an opening to act as inlet for a fluid, and an outlet in the context of the present invention may relate to the suitability of an opening to act as an outlet for the fluid.

The battery module 1 further comprise a pair of electric module terminals 31, 32 for connecting the battery assemblies 100 to the outside, each electric module terminal 31, 32 being arranged thermally closer to one of the inlet openings 210-1, 210-2 than to an outlet opening 220-3. It is noted that generally, electric module terminals are to be seen as main module terminals that provide a module connection to outside, e.g. the power supply system of a vehicle, as opposed to, for example, pole, bus bars, and assembly terminals.

Further, both battery assemblies 100-1, 100-2 are low-voltage battery assemblies for that its respectively constituting cells are connected in series to provide a relatively low voltage equalling for example the nominal voltage of a single cell multiplied by the number n of cells in the battery assembly. The battery assemblies 100-1, 100-2 (100) can be in turn connected in series so as to form a high-voltage battery module with a relatively high voltage equalling essentially the sum of the voltage of the battery assemblies. For this purpose, a bar connector 33 may be provided to establish the (series) connection of the battery assemblies 100.

In the shown example, the inlets 210-1 and 210-2 are arranged to receive fluid, so that the temperature of the fluid will be lower than at a point of a corresponding outlet (220-1 and 220-2, respectively) under the assumption that the fluid absorbs heat from the cells during the flow through the corresponding continuous spaces 21, 22. The electric module terminals 31, 32, are arranged here not only thermally but also spatially closer to the inlets 210-1, 210-2, as compared to outlet 220-3 in the sense of having electric module terminals being arranged spatially closer to one of the inlet openings than to an outlet opening. The electric module terminals may be further arranged in correspondence to the orientation and configuration of the batter assemblies 100-1, 100-2 in a way that the end points of the full series connection (e.g. established by the interconnectors 120, the interconnector 33 and the alternating orientation of neighbouring cells) are on opposing side ends of the module housing 20 and, with this, at the location of the inlets.

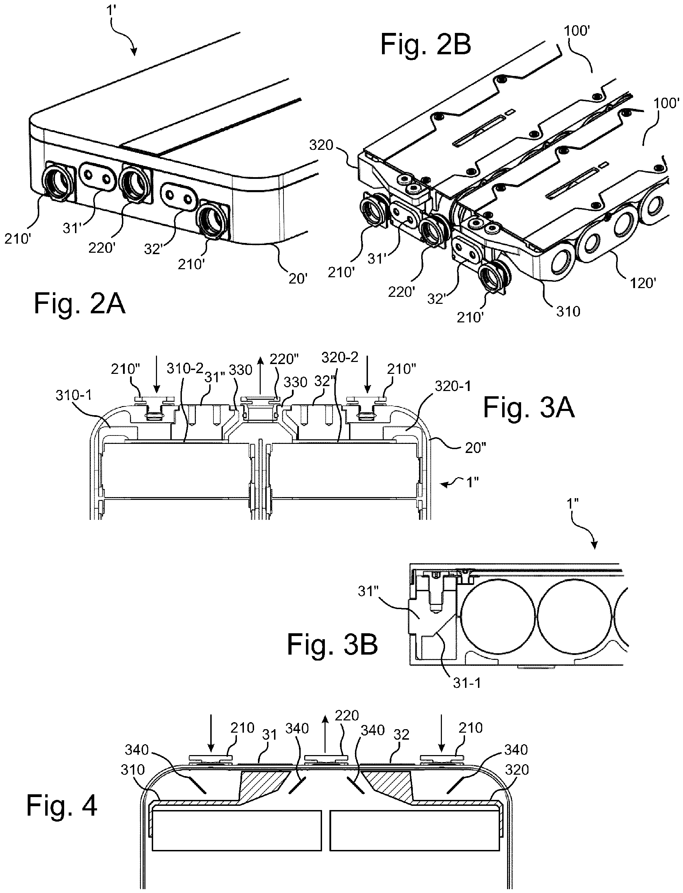

Figures 2A and 2B show schematic views of an electric terminal configuration according to an embodiment of the present invention. While Figure 2A focusses on the outside appearance, Figure 2B shows internal details with the housing removed for illustration purposes. Specifically, there is shown a battery module 1' comprising two battery assemblies 100'. The schematic view also shows some cells of which the appropriate poles are connected by means of an interconnector 120'. Electric module terminals 31', 32' establish a connection of the internal serial connection of at lest a part of the cells to the outside and thus provide connection to the power supply system of a vehicle. The electric module terminals 31', 32' may be provided with plugs and respective fitting features so as to facilitate or permit only proper and reliable connection. For example, such fitting features may provide an appropriate connection with regard to polarity.

In the shown embodiment, the pair of electric module terminals 31', 32' for connecting the battery assemblies to the outside, are arranged thermally closer to one of the inlet openings 210' than to an outlet opening 220', whilst not necessarily being arranged spatially closer to one of the inlet openings than to an outlet opening. In particular, the present embodiments considers the explicit situation in which thermally closer does not require an arrangement that is spatially closer: In the shown embodiment, the internal leads 310, 320 of the electric module terminals 31', 32' are guided so that the heat exchange with fluid coming from the inlets 210' is higher than with fluid flowing toward the outlet 220'. Specifically, the electric module terminals 31', 32' comprise leads 31, 320 that provide a larger heat exchange surface toward fluid from the inlets than fluid toward an outlet, both said concerning inlets and said outlet(s) being arranged on a same side of the module housing 20'.

Figures 3A and 3B show a schematic views of an electric terminal configuration according to an embodiment of the present invention. Specifically, there is shown a battery module 1" with a housing 20" and some of the constituting cells 110. The remainder of the features and solutions are generally identical, respectively adapted or similar to the respective elements as described elsewhere in the present disclosure. The present embodiment considers an impedance element for guiding a fluid flowing through a continuous space and arranged to relatively decrease along an internal part of an electric module terminal a flow of fluid directed to an outlet.

Specifically, there is provided an impedance element 330 that can effectively shield an protect at least some internal parts of the electric terminals 31", 32" from flow of fluid toward the outlet 220" on the side of the electric terminals on the housing 20". The mentioned internal parts may comprise plug blocks forming the terminals 31", 32" which may comprise one or more holes for engaging with a respective pin or plug. The blocks may be connected to planar connectors 210-1, 320-1, and a further contact element 310-1, 320-1 which ultimately connect to a cells pole. In this way, the pair of electric module terminals 31", 32" for connecting the battery assemblies of the module 1" to the outside are arranged thermally closer to the inlet openings 210" than to the outlet opening 220". The impedance element 330 may at the same time act as or may be replaced by an insulation element that is arranged to impede the thermal flow to an internal part of the electric module from fluid directed to an outlet. Further, one of said elements 330 can be formed integrally as a part of the housing 20".

In Figure 3B there is further visible a surface 31-1 of an inner part of the terminal 31" that provides an increased heat exchange to fluid flowing freshly into the module, the mentioned increased exchange being relative to heat exchange toward other parts, especially toward fluid that is about to leave the module after having already absorbed heat from the elements to be cooled.

Figure 4 shows a schematic view of an electric terminal configuration according to an embodiment of the present invention. Specifically, in the shown battery module there are provided one or more enhancement element(s) 340 for guiding a fluid flowing through a continuous space and arranged to relatively increase along an internal part of an electric module terminal a flow of fluid originating from an inlet. The enhancement or guiding elements 340 may be provided so as to enhance and impede the respective flow so as to establish a configuration in which the electric module terminals are arranged thermally closer to one of the inlet openings than to an outlet opening, without, however, strictly obstructing or limiting flow. Respective embodiments may therefore provide the enhancement of cooling whilst leaving fluid flow as free as possible to obtain other objectives in the batter module. Further, enhancement element (s) 340 for guiding a fluid may be implemented by a relatively small use of material.

Generally, the battery modules along embodiments of the present invention may comprise a housing that in turn comprises a base housing and a sealed lid. In this way, the battery assemblies can be inserted into the housing and the lid can be closed and sealed. At least one cell holder can also form one part with the housing. For example, a first cell holder forms part of the base housing and/or a second cell holder forms part of the lid. Generally, a cell holder can be from one piece and may comprises a plurality of recesses, each one configured to accommodate at least in part a respective cell.

Although detailed embodiments have been described, these only serve to provide a better understanding of the invention defined by the independent claims and are not to be seen as limiting.

## Claims

1. A battery module comprising
at least two battery assemblies, each in turn comprising a plurality of cells with two poles at opposing ends and arranged laterally in one row next to each other so that a pole of a cell is next to a pole of a neighbouring cell, and a plurality of interconnectors connecting a pole of a cell to pole of a neighbouring cell,
a housing arranged to accommodate the at least two battery assemblies and forming a respective continuous space around each row of poles allowing for fluid flow, and comprising an inlet opening and an outlet opening for each continuous space formed, and
a pair of electric module terminals for connecting the battery assemblies to the outside, each electric module terminal being arranged thermally closer to one of the inlet openings than to an outlet opening.

2. The battery module according to claim 1, wherein an electric module terminal is arranged spatially closer to one of the inlet openings than to an outlet opening.

3. The battery module according to claim 1 or 2, further comprising an enhancement element for guiding a fluid flowing through a continuous space and arranged to relatively increase along an internal part of an electric module terminal a flow of fluid originating from an inlet.

4. The battery module according to any one of claims 1 to 3, further comprising an impedance element for guiding a fluid flowing through a continuous space and arranged to relatively decrease along an internal part of an electric module terminal a flow of fluid directed to an outlet.

5. The battery module according to any one of claims 1 to 4, further comprising an insulation element arranged to impede thermal flow to an internal part of an electric module from fluid directed to an outlet.

6. The battery module according to any one of claims 3 to 5, wherein one of said elements is formed integrally as a part of the housing.

7. The battery module according to any one of claims 1 to 6, wherein an internal part of an electric module terminal provides a larger surface toward the thermally closer inlet than toward the outlet opening.

8. The battery module according to any one of claims 1 to 7, wherein the electric module terminals comprise leads that provide a larger heat exchange surface toward fluid from an inlet than fluid toward an outlet.

9. The battery module according to any one of claims 1 to 8, wherein the inlet opening to which an electric module terminal is arranged thermally closer as compared to an outlet opening and said outlet opening are arranged on the same side of the housing.
